# EUROPEAN PATENT SPECIFICATION

(11) **EP 3 222 882 B1**
(45) Date of publication and mention of the grant of the patent: **23.01.2019**
(21) Application number: 17160705.4
(22) Date of filing: 14.03.2017
(51) Int. Cl.: F16H 55/08, F03D 7/02, F03D 1/06

(54) **DRIVE DEVICE FOR DRIVING MOVABLE PORTION OF WINDMILL, AND WINDMILL**
ANTRIEBSVORRICHTUNG ZUM ANTRIEB EINES BEWEGLICHEN TEILS EINER WINDMÜHLE UND WINDMÜHLE
DISPOSITIF D'ENTRAÎNEMENT POUR ENTRAÎNER LA PARTIE MOBILE D'UNE ÉOLIENNE ET ÉOLIENNE

(30) Priority: 15.03.2016 JP 2016050406
(43) Date of publication of application: 27.09.2017
(73) Proprietor: Nabtesco Corporation, Tokyo 102-0093 (JP)
(72) Inventor: YOKOYAMA, Katsuhiko, Fuwa-gun, Gifu 503-2121 (JP); HOSODA, Shigeru, Fuwa-gun, Gifu 503-2121 (JP)
(74) Representative: Grünecker Patent- und Rechtsanwälte PartG mbB

(56) References cited:
- WO-A1-2011/141786
- DE-A1- 2 445 104
- DE-A1-102013 006 281
- US-A1- 2008 092 685
- US-A1- 2008 236 320
- US-A1- 2011 249 988

## Description

### Technical Field

The present invention relates to a drive device for driving a movable portion of a windmill, and a windmill.

### Background Art

A windmill includes a movable portion such as a nacelle and blades. The windmill operates the movable portion according to a wind direction or a wind velocity to efficiently generate electric power. The windmill uses a drive device including a drive gear which engages with a driven gear placed on the movable portion in order to operate the movable portion. JP 2007-132207 A as well as DE102013006281 A1 disclose a pinion as the drive gear. The pinion meshes with a ring gear formed on a blade or a nacelle.

Since the windmill has to continuously generate electric power (e.g. for twenty years or longer), a maintenance-free structure is required for the windmill, rather than general machinery facilities. Therefore, it is preferable that a contact pressure between the pinion and the ring gear becomes uniform in the tooth trace direction as much as possible.

Crowning processing is known as a processing technique for making a contact pressure uniform. So, US2011/249988 A1 discloses a crowning process whereby the tooth thickness decreases from the maximum tooth thickness position toward the maximum force receiving position at a first degree and decreases from the maximum tooth thickness position away from the maximum force receiving position at a second degree.
As a result of appropriate crowning processing, a tooth surface of the pinion may receive a uniform contact pressure while the movable portion of the windmill is driven.

The windmill may be suddenly exposed to a gust. In this case, a tooth surface of external teeth of the pinion may be pushed by a tooth surface of internal teeth of the ring gear to receive a high contact pressure although the movable portion of the windmill is not driven by the drive device.

The inventors found that a contact pressure distribution while the drive device drives the movable portion is largely different from a contact pressure distribution resultant from an external force (e.g. the aforementioned gust). The difference in contact pressure distribution between these conditions may increase a risk of damage or breakage of the pinion and/or the ring gear. For instance, a very non-uniform contact pressure distribution (a distribution in which a fluctuation in contact pressure is large in the tooth trace direction) may appear in the presence of an external force even if the pinion is subjected to crowning processing in order to make a contact pressure distribution uniform while the drive device drives the movable portion.

### Summary of Invention

An object of the present invention is to provide techniques for driving a windmill with a reduced fluctuation in contact pressure in the tooth trace direction under various conditions. Therefore, a drive device according to the features of claim 1 is provided.

A drive device drives a
movable portion of a windmill which generates electric power according to a change in a wind direction. The drive device includes a motor which generates a driving force for driving the movable portion, a speed reducer which amplifies the driving force at a predetermined speed reduction ratio, and a drive gear which engages with a driven gear placed on the movable portion and transmits the driving force amplified by the speed reducer to the driven gear. The drive gear includes a tooth surface having a contour which is curved on an imaginary plane in parallel to a rotational axis of the drive gear. The contour includes a first curve, and a second curve which is different in curvature from the first curve.

A windmill according to another aspect of the present invention includes the aforementioned drive device, and a ring gear which engages with the drive gear.

A drive device according to yet another aspect of the present invention drives a movable portion of a windmill which generates electric power according to a change in a wind direction. The drive device includes a motor which generates a driving force for driving the movable portion, a speed reducer which amplifies the driving force at a predetermined speed reduction ratio, and a drive gear which engages with a driven gear placed on the movable portion and transmits the driving force amplified by the speed reducer to the driven gear. The drive gear includes a tooth surface having a contour which is curved on an imaginary plane in parallel to a rotational axis of the drive gear. The contour is formed so as to reduce a difference in fluctuation of contact pressure in the tooth trace direction between when a first load is applied on the tooth surface from the driven gear and when a second load larger than the first load is applied on the tooth surface from the driven gear.

The aforementioned techniques may result in a reduced fluctuation in contact pressure in the tooth trace direction.

These and other objects, features and advantages of the aforementioned drive device and windmill will become more apparent upon reading the following detailed description along with the accompanying drawings.

### Brief Description of Drawings

FIG. 1 is a schematic partial cross-sectional view of a windmill according to the first embodiment not according to the present invention;
FIG. 2 is a table showing a relationship between a contour shape of a tooth surface of external teeth of a pinion and a contact pressure distribution which is applied on the tooth surface; and
FIG. 3 is a schematic cross-sectional view of external teeth of a pinion supported at both ends according to the invention (the second embodiment).

### Description of Embodiments

### <First Embodiment not according to the present invention>

The crowning processing may be applied to a pinion for driving a windmill. A curvature of a tooth surface which is obtained by the crowning processing is set to such a value that a biased contact is not happen to the pinion against a ring gear of the windmill when a drive device drives the windmill. However, the curvature of the tooth surface may be inappropriate when the windmill is exposed to an external force such as a gust. A drive device including a pinion having a tooth surface shape which is suitable for various environments is described in the first embodiment.

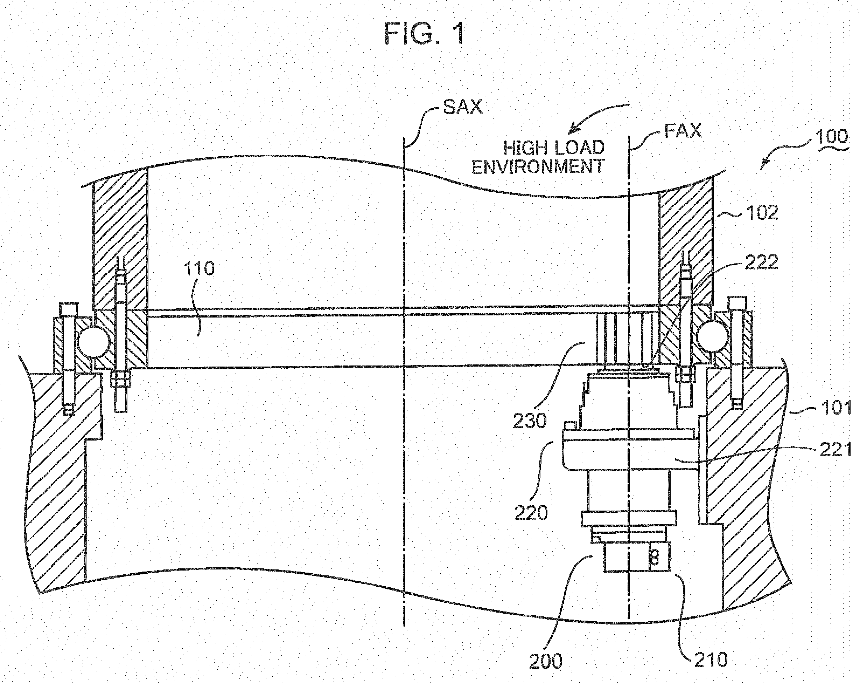

FIG. 1 is a schematic partial cross-sectional view of a windmill 100 according to the first embodiment not forming part of the invention. The windmill 100 is described with reference to FIG. 1.

The windmill 100 includes a first portion 101, a second portion 102 and a drive device 200. The second portion 102 is rotated relatively to the first portion 101. The first portion 101 may be a tower. In this case, the second portion 102 is a nacelle mounted on an upper end of the tower. Alternatively, the first portion 101 may be a hub. In this case, the second portion 102 is one of blades radially protruding from the hub. Various connection structures for use in a known windmill are applicable to a connection between the first and second portions 101, 102. The principles of the present embodiment are not limited to a specific connection structure between the first and second portions 101, 102. With regard to the present embodiment, the movable portion is exemplified by the second portion 102.

The second portion 102 is generally tubular. The second portion 102 includes a ring gear 110 formed on the inner surface. The drive device 200 is connected to the ring gear 110. Therefore, the second portion 102 is driven by the drive device 200. With regard to the present embodiment, the driven gear is exemplified by the ring gear 110.

The drive device 200 includes a motor 210, a speed reducer 220 and a pinion 230. The motor 210 generates a driving force for driving the second portion 102. The motor 210 is fixed to the speed reducer 220. The speed reducer 220 amplifies a driving force output from the motor 210 at a predetermined speed reduction ratio. The speed reducer 220 includes a housing 221, in which a speed reduction mechanism (not shown) is stored, and an output shaft 222 protruding from the housing 221. The housing 221 is fixed to the inner surface of the substantially tubular first portion 101. The output shaft 222 is inserted into the pinion 230. The pinion 230 meshes with the ring gear 110. Therefore, the driving force amplified by the speed reducer 220 is transmitted to the ring gear 110. With regard to the present embodiment, the drive gear is exemplified by the pinion 230.

Various motor devices for use in driving a known windmill are applicable to the motor 210. The principles of the present embodiment are not limited to a specific motor device which is used as the motor 210.

The speed reducer 220 may include a speed reduction mechanism having an oscillation gear. Alternatively, the speed reducer 220 may include a speed reduction mechanism having a planetary gear. The principles of the present embodiment are not limited to a specific speed reduction mechanism incorporated in the speed reducer 220.

Optionally, the speed reducer 220 may have a clutch mechanism (not shown). When a torque applied to the output shaft 222 exceeds a predetermined threshold value, the clutch mechanism may block transmission of a driving force between the motor 210 and the pinion 230. Consequently, a contact pressure between the pinion 230 and the ring gear 110 is not excessively increased. With regard to the present embodiment, the blocking mechanism is exemplified by the clutch mechanism incorporated in the speed reducer 220. The blocking mechanism may be situated between a motor and a speed reducer. Alternatively, the blocking mechanism may be situated between a speed reducer and a pinion.

The pinion 230 may be a spur gear. In this case, the pinion 230 may be easily and precisely processed. In addition, an unnecessary force does not happen to the pinion 230 in the thrust direction. Alternatively, the pinion 230 may be a gear component of another type. A designer may determine a type of a gear which is used as the pinion 230 so as to meet characteristics required for the windmill 100. The principles of the present embodiment are not limited to a specific type of a gear which is used as the pinion 230.

FIG. 1 conceptually shows a first axis FAX and a second axis SAX. The first axis FAX indicates a rotational axis of the pinion 230. The second axis SAX indicates a rotational axis of the second portion 102.

When the drive device 200 drives the second portion 102 in a normal environment (e.g. an environment in which the windmill 100 is not exposed to an extremely strong wind), the first axis FAX is substantially in parallel to the second axis SAX. When the windmill 100 is exposed to an extremely strong wind (i.e. in a high load environment), the second portion 102 is rotated by the strong wind even when the drive device 200 does not generate a driving force. In this case, a strong radial force acts on the pinion 230. The pinion 230 is mounted on the cantilevered output shaft 222. Therefore, the radial force bends the output shaft 222 in such a direction that the distal end of the output shaft 222 moves away from the ring gear 110.

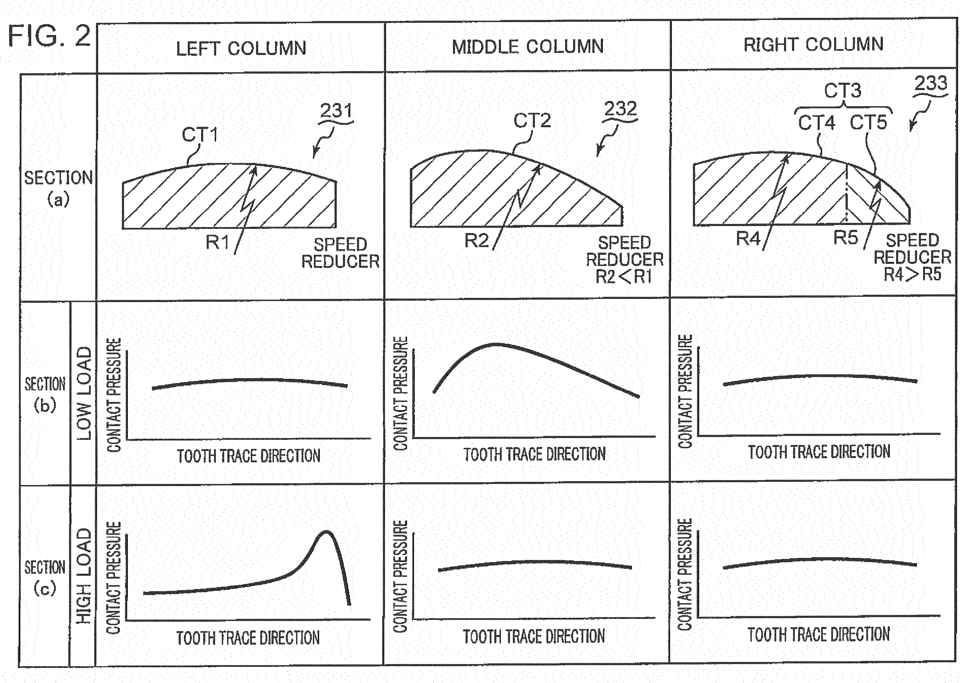

FIG. 2 is a table showing a relationship between a contour shape of a tooth surface of external teeth of a pinion and a contact pressure distribution which happens to the tooth surface. The contact pressure which happens to the external teeth is described with reference to FIGS. 1 and 2.

The left column in FIG. 2 is related to external teeth 231 of a pinion, which are generally formed so as to be suitable for the normal environment in which a low load is applied (a comparative example). The middle column in FIG. 2 is related to external teeth 232 of a pinion, which are formed so as to be suitable for the environment in which a high load is applied (a comparative example). The right column in FIG. 2 shows a schematic cross-section of external teeth 233 on an imaginary plane in parallel to the first axis FAX. The shape of the external teeth 233 shown in the right column in FIG. 2 is applicable to the pinion 230 depicted in FIG. 1.

The section (a) of the left column shows a schematic cross-section of the external teeth 231 on an imaginary plane in parallel to a rotational axis of the pinion. A speed reducer is situated on the right side of the external teeth 231.

The section (a) of the left column shows a shape of a contour CT1 extending in the tooth trace direction of a tooth surface. The contour CT1 is formed by an arc having a radius R1 of curvature over the entire length in the tooth trace direction. The radius R1 of curvature is determined to be suitable for the normal environment in which a low load is applied.

The section (b) of the left column is a graph schematically showing a contact pressure distribution in the tooth trace direction under the normal environment in which a low load is applied. The radius R1 of curvature is determined to be suitable for the normal environment in which a low load is applied. Therefore, a fluctuation in contact pressure in the tooth trace direction is small under the normal environment.

The section (c) of the left column is a graph schematically showing a contact pressure distribution in the tooth trace direction under the environment in which a high load is applied (e.g. an environment in which a windmill is exposed to an extremely strong wind). As described with reference to FIG. 1, the rotational axis of the pinion is tilted under the environment in which a high load is applied. Therefore, a biased contact happens to the pinion in a vicinity of the speed reducer. Consequently, a contact pressure becomes very high near the speed reducer. On the other hand, a contact pressure becomes very small at a position away from the speed reducer. Therefore, the tooth surface shape of the external teeth 231 shown in the left column is not appropriate under the high load environment although the tooth surface shape is appropriate under the normal environment.

The section (a) of the middle column shows a schematic cross-section of the external teeth 232 on an imaginary plane in parallel to a rotational axis of the pinion. A speed reducer is situated on the right side of the external teeth 232.

The section (a) of the middle column shows a shape of a contour CT2 extending in the tooth trace direction of a tooth surface. The contour CT2 is formed by an arc having a radius R2 of curvature over the entire length in the tooth trace direction. The radius R2 of curvature is determined to be suitable for the environment in which a high load is applied. Therefore, the radius R2 of curvature is smaller than the radius R1 of curvature described with reference to the left column. In addition, the external teeth 232 is designed to be the thickest at a position, which is more distant from the speed reducer than the external teeth 231 described with reference to the left column, the tilt (c.f. FIG. 1) of the rotational axis when a high load is applied being taken account of.

The section (b) of the middle column is a graph schematically showing a contact pressure distribution in the tooth trace direction under the normal environment in which a low load is applied. Since the radius R2 of curvature is not determined to be suitable for the normal environment in which a low load is applied, a contact pressure becomes high near a middle portion in the tooth trace direction. On the other hand, a contact pressure becomes low near an end in the tooth trace direction.

The section (c) of the middle column is a graph schematically showing a contact pressure distribution in the tooth trace direction under the environment in which a high load is applied. Since the radius R2 of curvature is determined to be suitable for the environment in which a high load is applied, a fluctuation in contact pressure in the tooth trace direction becomes small under the environment in which a high load is applied. The tooth surface shape of the external teeth 232 shown in the middle column is not appropriate under the normal environment although the tooth surface shape is appropriate under the environment in which a high load is applied.

The section (a) of the right column shows a schematic cross-section of the external teeth 233 on an imaginary plane in parallel to the first axis FAX. The speed reducer 220 is situated on the right side of the external teeth 233.

The section (a) of the right column shows a shape of a contour CT3 extending in the tooth trace direction of a tooth surface. The contour CT3 includes contours CT4, CT5, which have radii of curvature different from each other. The contour CT4 is formed by an arc having a radius R4 of curvature. The contour CT5 is formed by an arc having a radius R5 of curvature. The radius R4 of curvature is larger than the radius R5 of curvature.

A tooth surface region indicated by the contour CT5 is situated at a position closer to the speed reducer 220 than a tooth surface region indicated by the contour CT4. With regard to the present embodiment, the first curve is exemplified by the contour CT4, and the second curve is exemplified by the contour CT5. The contours CT4, CT5 may be defined as a line of intersection between an imaginary plane in parallel to the first axis FAX, and the tooth surface of the external teeth 233.

The section (b) of the right column is a graph schematically showing a contact pressure distribution in the tooth trace direction under the normal environment in which a low load is applied. Since the radius R4 of curvature is larger than the radius R5 of curvature, a designer designing the pinion 230 may set the radius R4 of curvature so as to be suitable for the normal environment in which a low load is applied. Since the first axis FAX is substantially in parallel to the second axis SAX under the normal environment, the small radius R5 of curvature of the contour CT5 does not cause a large fluctuation in contact pressure distribution. Therefore, the contact pressure becomes uniform under the normal environment.

The section (c) of the right column is a graph schematically showing a contact pressure distribution in the tooth trace direction under the environment in which a high load is applied. As described with reference to FIG. 1, the first axis FAX is tilted with respect to a position substantially in parallel to the second axis SAX under the environment in which a high load is applied. Consequently, a biased contact against the ring gear 110 is likely to happen to a tooth surface region formed by the contour CT5. However, the pinion 230 may cause self-alignment to effectively reduce deflection of the first axis FAX so that a tooth surface region formed by the contour CT4 is abutted against the ring gear 110 since the radius R5 of curvature of the contour CT5 is small. Accordingly, the contact pressure becomes uniform even under the environment in which a high load is applied.

### <Second Embodiment>

Design techniques of a tooth surface which is applied to a pinion supported at both ends is described in the second embodiment which forms part of the invention.

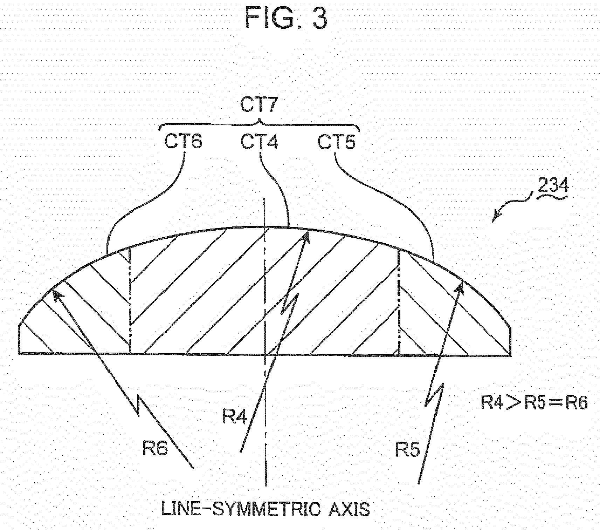

FIG. 3 is a schematic partial cross-sectional view of external teeth 234 of a pinion (not shown) supported both ends. The external teeth 234 are described with reference to FIGS. 2 and 3. The description of the first embodiment is applied to elements indicated with the same reference numerals as those in the first embodiment.

FIG. 3 shows a shape of a contour CT7 extending in the tooth trace direction of a tooth surface. Like the contour CT3 described with reference to FIG. 2, the contour CT7 includes contours CT4, CT5. The description of the first embodiment is applied to the contours CT4, CT5.

The contour CT7 further includes a contour CT6 extending in the tooth trace direction. The contour CT6 is situated on the imaginary plane common to the contours CT4, CT5. The contour CT6 is continuous to the contours CT4, CT5. The contour CT4 is situated between the contours CT5, CT6. FIG. 4 shows a line-symmetric axis intersecting with the contour CT4. The contour CT6 is substantially axisymmetric to the contour CT5 with respect to the line-symmetric axis.

The contour CT6 is formed by an arc having a radius R6 of curvature. The radius R6 of curvature is substantially equal to the radius R5 of curvature. With regard to the present embodiment, the third curve is exemplified by the contour CT6.

A middle region of the external teeth 234 (i.e. a tooth surface region formed by the contour CT4) is mainly abutted against a ring gear (not shown) under the normal environment in which a low load is applied. A contact pressure between the middle region of the external teeth 234 and the ring gear does not excessively increase since the radius R4 of curvature of the contour CT4 is larger than other regions (i.e. tooth surface regions encompassing the contours CT5, CT6). Accordingly, a contact pressure becomes uniform even under the normal condition in which a low load is applied.

End regions of the external teeth 234 (i.e. tooth surface regions formed by the contours CT5, CT6) are likely to abut against the ring gear under the environment in which a high load is applied. However, the pinion 230 may cause self-alignment to effectively modify abutment of the pinion 230 against the ring gear 110 so that the tooth surface region formed by the contour CT4 is abutted against the ring gear 110 since the radii R5, R6 of curvature of the contours CT5, CT6 are small. Accordingly, a contact pressure becomes uniform even under the environment in which a high load is applied.

Boundaries between a tooth surface region formed by the contour CT4 and tooth surface regions formed by the contours CT5, CT6 may be formed by appropriate fitting curves so that a smooth curve of the contour CT7 is formed. The fitting curves may be determined on the basis of a curvature and/or an arc length of each of the contours CT4, CT5, CT6. The principles of the present embodiment are not limited to a specific curve shape at the boundaries between the tooth surface region formed by the contour CT4 and the tooth surface regions formed by the contours CT5, CT6.

The drive device and the windmill described in the context of the aforementioned embodiments mainly include the following features.

A drive device according to the second embodiment which forms part of the invention drives a movable portion of a windmill which generates electric power according to a change in a wind direction. The drive device includes a motor which generates a driving force for driving the movable portion, a speed reducer which amplifies the driving force at a predetermined speed reduction ratio, and a drive gear which engages with a driven gear placed on the movable portion and transmits the driving force amplified by the speed reducer to the driven gear. The drive gear includes a tooth surface having a contour which is curved on an imaginary plane in parallel to a rotational axis of the drive gear. The contour includes a first curve, and a second curve which is different in curvature from the first curve.

According to the aforementioned configuration, since the contour, which is curved on the imaginary plane in parallel to the rotational axis of the drive gear, includes the first curve, and the second curve which is different in curvature from the first curve, the tooth surface of external teeth may have a curvature which is suitable for various conditions. Therefore, a fluctuation in contact pressure becomes small in the tooth trace direction under various conditions.

With regard to the aforementioned configuration, the drive gear may be mounted on a cantilevered output shaft of the speed reducer. The second curve may be closer to the speed reducer and larger in curvature than the first curve.

According to the aforementioned configuration, since the drive gear is placed on the cantilevered output shaft, a biased contact against the driven gear is likely to happen to the drive gear at a position closer to the speed reducer when a high radial force is generated. Since the second curve closer to the speed reducer is larger in curvature than the first curve, the biased contact of the drive gear against the driven gear is modified. Since the first curve is smaller in curvature than the second curve, a biased contact is less likely to occur on the first curve in the absence of a high radial force. Therefore, a fluctuation in contact pressure becomes small in the tooth trace direction under various conditions.

According to the invention, the drive gear is supported at both ends. The contour includes a third curve which is as large as the second curve. The first curve is formed between the second and the third curves. The third curve is axisymmetric to the second curve with respect to a line-symmetric axis intersecting with the first curve.

According to the aforementioned configuration, since the drive gear is supported at both ends, a biased contact against the driven gear is likely to happen to the drive gear on the second and third curves when a high radial force is generated. Since the second and third curves are larger in curvature than the first curve, the biased contact of the drive gear against the driven gear is likely to be modified. Since the first curve is smaller in curvature than the second and third curves, a biased contact is less likely to occur on the first curve in the absence of a high radial force. Therefore, a fluctuation in contact pressure becomes small in the tooth trace direction under various conditions.

With regard to the aforementioned configuration, the drive device may further include a blocking mechanism which blocks transmission of the driving force from the motor to the drive gear.

According to the aforementioned configuration, since the blocking mechanism blocks transmission of the driving force from the motor to the drive gear, an excessively high radial force is less likely to happen to the drive gear. Therefore, there is a low risk of damage or breakage of the drive gear and/or the driven gear.

A windmill according to another aspect of the second embodiment includes the aforementioned drive device, and a ring gear which engages with the drive gear.

According to the aforementioned configuration, since the windmill includes the aforementioned drive device, the ring gear may receive a contact pressure which has a reduced fluctuation in the tooth trace direction under various conditions. Therefore, there is a low risk of damage or breakage of the windmill.

A drive device according to another aspect of the aforementioned embodiments drives a movable portion of a windmill which generates electric power according to a change in a wind direction. The drive device includes a motor which generates a driving force for driving the movable portion, a speed reducer which amplifies the driving force at a predetermined speed reduction ratio, and a drive gear which engages with a driven gear placed on the movable portion and transmits the driving force amplified by the speed reducer to the driven gear. The drive gear includes a tooth surface having a contour which is curved on an imaginary plane in parallel to a rotational axis of the drive gear. The contour is formed so as to reduce a difference in fluctuation of contact pressure in the tooth trace direction between when a first load is applied on the tooth surface from the driven gear and when a second load larger than the first load is applied on the tooth surface from the driven gear.

According to the aforementioned configuration, since the contour, which is curved on the imaginary plane in parallel to the rotational axis of the drive gear, is formed so as to reduce a difference in fluctuation of a contact pressure in the tooth trace direction between when the first load is applied on the tooth surface from the driven gear and when the second load larger than the first load is applied on the tooth surface from the driven gear, the fluctuation of the contact pressure becomes small in the tooth trace direction even under a condition in which the rotational axis of the drive gear is tilted with respect to the rotational axis of the driven gear.

The principles of the aforementioned embodiments are advantageously used in driving a movable portion of a windmill.

## Claims

1. A drive device (200) for driving a movable portion (102) of a windmill (100) which generates electric power according to a change in wind direction, the drive device (200) comprising: a motor (210) configured to generate a driving force for driving the movable portion (102); a speed reducer (220) configured to amplify the driving force at a predetermined speed reduction ratio; and a drive gear (230) which engages with a driven gear (110) placed on the movable portion (102) and transmits the driving force amplified by the speed reducer (220) to the driven gear (110), **characterized in that** the drive gear (230) is supported at both ends and includes a tooth surface having a contour (CT3; CT7) which is curved on an imaginary plane in parallel to a rotational axis (FAX) of the drive gear (230), and the tooth surface is a surface to which a contact pressure happens when a load is applied from the driven gear (110) wherein the contour (CT3; CT7) includes a first curve (CT4), a second curve (CT5) which is different in curvature from the first curve (CT4) and a third curve (CT6) which is as large in curvature as the second curve (CT5), wherein the first curve (CT4) is formed between the second curve (CT5) and the third curve (CT6), and wherein the third curve (CT6) is axisymmetric to the second curve (CT5) with respect to a line-symmetric axis intersecting with the first curve (CT4).

2. The drive device (200) according to Claim 1, further comprising: a blocking mechanism which blocks transmission of the driving force from the motor (210) to the drive gear (230).

3. A windmill (100), comprising: the drive device (200) according to any one of Claims 1 to 2; and a ring gear (110) which engages with the drive gear (230).

## Patentansprüche

1. Eine Antriebseinrichtung (200) zum Antreiben eines beweglichen Abschnitts (102) eines Windrads (100), das elektrische Energie gemäß einer Änderung in der Windrichtung erzeugt, wobei die Antriebseinrichtung (200) aufweist:
einen Motor (210), der ausgestaltet ist, eine Antriebskraft zum Antreiben des beweglichen Abschnitts (102) zu erzeugen;
ein Untersetzungsgetriebe (220), das ausgestaltet ist, die Antriebskraft bei einem vorgegebenen Untersetzungsverhältnis zu verstärken; und ein Antriebszahnrad (230), das mit einem angetriebenen Zahnrad (110), das an dem beweglichen Abschnitt (102) platziert ist, im Eingriff steht und die von dem Untersetzungsgetriebe (220) verstärkte Antriebskraft an das angetriebene Zahnrad (110) überträgt, **dadurch gekennzeichnet, dass**
das Antriebszahnrad (230) an beiden Enden abgestützt ist und eine Zahnoberfläche beinhaltet, die eine Kontur (CT3; CT7) aufweist, die auf einer imaginären Ebene parallel zu einer Rotationsachse (FAX) des Antriebszahnrads (230) gekrümmt ist, und die Zahnoberfläche eine Oberfläche ist, der ein Kontaktdruck widerfährt, wenn eine Last von dem angetriebenen Zahnrad (110) aufgebracht wird, wobei die Kontur (CT3; CT7) eine erste Krümmung (CT4), eine zweite Krümmung (CT5), die unterschiedlich in Krümmung von der ersten Krümmung (CT4) ist, und eine dritte Krümmung (CT6), die so groß in Krümmung wie die zweite Krümmung (CT5) ist, beinhaltet, wobei die erste Krümmung (CT4) zwischen der zweiten Krümmung (CT5) und der dritten Krümmung (CT6) ausgebildet ist, und wobei die dritte Krümmung (CT6) achsensymmetrisch zu der zweiten Krümmung (CT5) bezüglich einer liniensymmetrischen Achse, die die erste Krümmung (CT4) schneidet, ist.

2. Die Antriebseinrichtung (200) gemäß Anspruch 1, weiterhin aufweisend:
einen Sperrmechanismus, der Übertragung der Antriebskraft von dem Motor (210) an das Antriebszahnrad (230) sperrt.

3. Ein Windrad (100), aufweisend: die Antriebseinrichtung (200) gemäß irgendeinem der Ansprüche 1 bis 2; und ein Hohlrad (110), das mit dem Antriebszahnrad (230) im Eingriff steht.

## Revendications

1. Dispositif d'entraînement (200) pour entraîner une partie mobile (102) d'une éolienne (100) qui génère de l'énergie électrique en fonction d'un changement de direction du vent, le dispositif d'entraînement (200) comportant :
un moteur (210) configuré pour générer une force motrice pour entraîner la partie mobile (102) ; un réducteur de vitesse (220) configuré pour amplifier la force motrice pour un rapport de réduction de vitesse prédéterminé ; et une roue menante (230) qui entre en prise avec une roue menée (110) placée sur la partie mobile (102) et transmet la force motrice amplifiée par le réducteur de vitesse (220) à la partie menée (102), **caractérisé en ce que**
la roue menante (230) est soutenue aux deux extrémités et comprend une surface de dent ayant un contour (CT3 ; CT7) qui est incurvé dans un plan imaginaire parallèle à un axe de rotation (FAX) de la roue menante (230), et la surface de dent est une surface à laquelle est appliquée une pression de contact quand une charge est appliquée par la roue menée (110), où le contour (CT3 ; CT7) comprend une première courbe (CT4), une deuxième courbe (CT5) qui présente une courbure différente de la première courbe (CT4) et une troisième courbe (CT6) qui présente une courbure aussi large que la deuxième courbe (CT5), où la première courbe (CT4) est formée entre la deuxième courbe (CT5) et la troisième courbe (CT6), et où la troisième courbe (CT6) est axisymétrique de la deuxième courbe (CT5) par rapport à un axe de symétrie croisant la première courbe (CT4).

2. Dispositif d'entraînement (200) selon la revendication 1, comportant en outre :
un mécanisme de blocage qui bloque la transmission de la force motrice du moteur (210) à la roue menante (230).

3. Éolienne (100) comportant : le dispositif d'entraînement (200) selon l'une quelconque des revendications 1 à 2 ; et une couronne dentée (110) qui entre en prise avec la roue menante (230).
